# EUROPEAN PATENT APPLICATION

(11) **EP 4 606 678 A1**
(43) Date of publication of application: **27.08.2025**
(21) Application number: 25159258.0
(22) Date of filing: 21.02.2025
(51) Int. Cl.: B62D 1/00, B62D 15/02

(54) **PARKING ASSISTANCE SYSTEM, PARKING ASSISTANCE METHOD, AND PROGRAM**

(30) Priority: 22.02.2024 JP 2024025421
(71) Applicant: TOYOTA JIDOSHA KABUSHIKI KAISHA, Toyota-shi, Aichi-ken, 471-8571 (JP)
(72) Inventor: TSUCHIDA, Tomohiko, TOYOTA-SHI, AICHI-KEN, 471-8571 (JP)
(74) Representative: Cabinet Beau de Loménie

(57) **Abstract**

To increase convenience, provided is a system including a device which executes control of executing an automatically parking a vehicle or causing the vehicle to automatically exit based on a method selected by a user. The device includes: a storage module (110) which stores, in association with position information on a specific section, a parking method selected by a first user when the first user executes parking the vehicle in the specific section or causing the vehicle to exit from the specific section; a determination module (120) which determines, when a second user executes parking the vehicle in a predetermined section or causing the vehicle to exit from the predetermined section, whether the predetermined section is the specific section; and a processing module (130) which executes proposing, when the determination module determines that the predetermined section is the specific section, to the second user, the parking method stored in the storage module.

## Description

### BACKGROUND OF THE INVENTION

### 1. Field of the Invention

The present disclosure relates to a parking assistance system, a parking assistance method, and a program.

### 2. Description of the Related Art

There has been known a parking assistance system which causes a vehicle to automatically travel to cause the vehicle to execute parking (entry) in a predetermined parking section or exit from the parking section. For example, in Japanese Patent Application Laid-open No. 2021-500259, there is disclosed a device which executes processing of identifying a driver, processing of learning driver parameters during a parking process by the driver and associating the driver parameters with the identified driver, and processing of determining parking parameters based on the learned driver parameters, and controls, based on the determined parking parameters, a parking process of the vehicle performed by a parking assistance system.

As in the device as described in Japanese Patent Application Laid-open No. 2021-500259, when the driver parameters learned at the time of the parking are associated with a specific driver and are stored in the system as the parking parameters used for parking assistance control, convenience for the specific driver can be increased. However, in a case in which a vehicle is shared among a plurality of users, even when a user who uses the parking assistance system for the first time parks the vehicle in a parking section for which another user has already executed a selection operation for a parking method or the like, the user is required to execute the selection operation by himself or herself, and possibly feels a sense of annoyance. That is, there is room for further improvement in increasing convenience.

### SUMMARY OF THE INVENTION

The present disclosure has been made to solve the above-mentioned problem, and has an object to increase convenience by simplifying an operation in parking assistance.

According to a technology of at least one embodiment of the present disclosure, there is provided a parking assistance system including a control device configured to execute automatic parking control of executing one of automatically parking a vehicle in a parking section or causing the vehicle to automatically exit from the parking section based on a parking method selected by a user from a plurality of parking methods, the control device including: a storage module configured to store, in association with position information on a specific parking section, a parking method selected by a first user when the first user executes one of parking the vehicle in the specific parking section or causing the vehicle to exit from the specific parking section through the automatic parking control; a determination module configured to determine, when a second user executes one of parking the vehicle in a predetermined parking section or causing the vehicle to exit from the predetermined parking section through the automatic parking control, based on current position information on the vehicle and the position information on the specific parking section stored in the storage module, whether the predetermined parking section is the specific parking section; and a proposal processing module configured to execute proposal processing of proposing, when the determination module determines that the predetermined parking section is the specific parking section, to the second user, the parking method stored in the storage module in association with the position information on the specific parking section.

### BRIEF DESCRIPTION OF THE DRAWINGS

FIG. 1 is a schematic diagram for illustrating a hardware configuration of a parking assistance system according to at least one embodiment of the present disclosure.
FIG. 2 is a schematic diagram for illustrating a software configuration of the parking assistance system according to the at least one embodiment.
FIG. 3 is a schematic view for illustrating an example of a power supply operation screen in the at least one embodiment.
FIG. 4 is a schematic diagram for illustrating a state in which a vehicle is parked in a parking section.
FIG. 5 is a schematic view for illustrating an example of an exit plan selection screen in the at least one embodiment.
FIG. 6 is a schematic diagram for illustrating an example of a target exit path in the at least one embodiment.
FIG. 7 is a schematic view for illustrating an example of an exit plan checking screen in the at least one embodiment.
FIG. 8 is a schematic view for illustrating an example of an exit operation screen in the at least one embodiment.
FIG. 9 is a schematic view for illustrating an example of an exit finish checking screen in the at least one embodiment.
FIG. 10 is a schematic view for illustrating an example of an overhead image screen in the at least one embodiment.
FIG. 11 is a schematic view for illustrating an example of an entry plan selection screen in the at least one embodiment.
FIG. 12 is a schematic diagram for illustrating an example of a target entry path in the at least one embodiment.
FIG. 13 is a schematic view for illustrating an example of an entry plan checking screen in the at least one embodiment.
FIG. 14 is a schematic view for illustrating an example of an entry operation screen in the at least one embodiment.
FIG. 15 is a schematic view for illustrating an example of an entry finish checking screen in the at least one embodiment.
FIG. 16 is a schematic view for illustrating an example of a save checking screen in the at least one embodiment.
FIG. 17 is a flowchart for illustrating a routine of automatic exit control and setting proposal processing in the at least one embodiment.

### DESCRIPTION OF THE EMBODIMENTS

Description is now given of a parking assistance system, a parking assistance method, and a program according to at least one embodiment of the present disclosure with reference to the drawings.

### [Hardware Configuration]

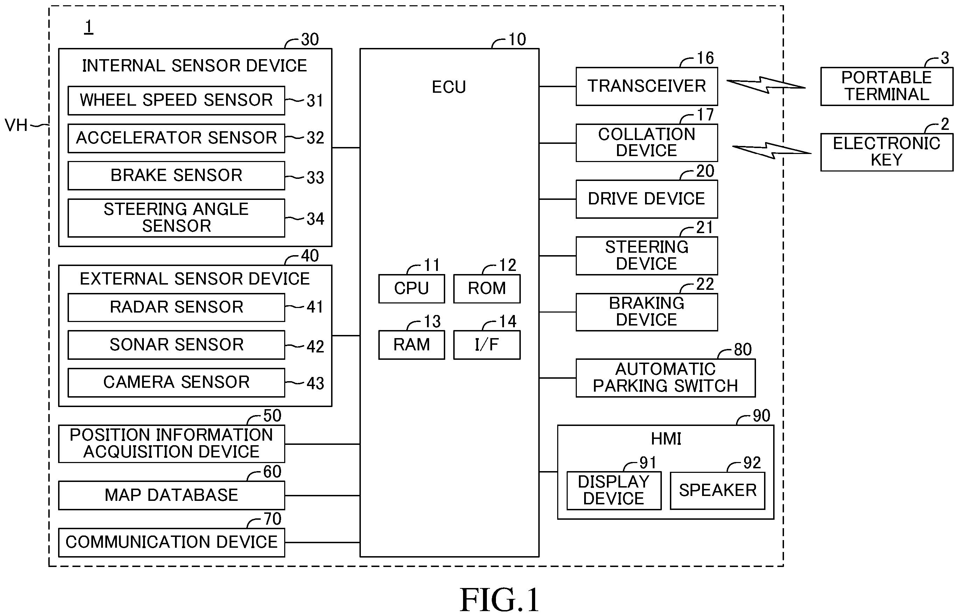

FIG. 1 is a schematic diagram for illustrating a hardware configuration of the parking assistance system according to the at least one embodiment. As illustrated in FIG. 1, the parking assistance system includes a vehicle control device 1, an electronic key 2, and a portable terminal 3. The vehicle control device 1 is mounted on a vehicle VH and includes an electronic control unit (ECU) 10. The ECU 10 includes a central processing unit (CPU) 11, a read only memory (ROM) 12, a random access memory (RAM) 13, an interface device 14, and the like. The CPU 11 is a processor which executes various programs stored in the ROM 12. The ROM 12 is a nonvolatile memory, and stores data and the like required for the CPU 11 to execute the various programs. The RAM 13 is a volatile memory, and provides a work area in which the various programs are loaded when the various programs are to be executed by the CPU 11. The interface device 14 is a communication device for communicating to and from an external device.

The ECU 10 is a central device which executes automatic entry control of causing the vehicle VH to automatically enter a parking section and automatic exit control of causing the vehicle VH to automatically exit from a parking section (the automatic entry control and the automatic exit control are hereinafter sometimes collectively referred to as "automatic parking control"). To the ECU 10, a transceiver 16, a collation device 17, a drive device 20, a steering device 21, a braking device 22, an internal sensor device 30, an external sensor device 40, a position information acquisition device 50, a map database 60, a communication device 70, an automatic parking switch 80, a human machine interface (HMI) 90, and the like are connected for communication.

The transceiver 16 is a communication module to be used to execute short-range wireless communication to and from the portable terminal 3. In the at least one embodiment, for example, the short-range wireless communication compliant with Bluetooth (trademark) is executed.

The portable terminal 3 is a device to be used by the user to remotely operate the vehicle VH, and is held by the user. The portable terminal 3 is, for example, a smartphone, but is not limited to the smartphone as long as an application described later can be installed on the portable terminal 3, and the portable terminal 3 may be, for example, a tablet terminal. The portable terminal 3 includes an ECU (not shown) and a communication unit which can transmit and receive a Bluetooth (trademark) signal.

When the user sets the portable terminal 3 as a device to be used to remotely operate the vehicle VH, the following work is executed in advance. Specifically, first, the application for executing the automatic parking control is installed on the portable terminal 3 (this application is also hereinafter referred to as "remote parking application"). After that, the portable terminal 3 and the vehicle control device 1 are paired (which means authentication and connection between devices compliant with the Bluetooth (trademark) standard). After that, the vehicle VH to be operated is registered in the remote parking application. As a result, the portable terminal 3 is associated as a terminal which can execute the wireless communication to and from the transceiver 16.

The collation device 17 is set to be paired with the electronic key 2, and wirelessly communicates to and from the electronic key 2 through use of, for example, the Bluetooth (trademark), to thereby achieve so-called smart entry. The electronic key 2 is not limited to the smart key system, but may be a digital key system in which the smartphone held by the user is used as a key.

The drive device 20 generates a driving force to be transmitted to driving wheels of the vehicle VH. As the drive device 20, for example, an electric motor and an engine are given. In the parking assistance system of the at least one embodiment, the vehicle VH may be any one of a hybrid electric vehicle (HEV), a plug-in hybrid electric vehicle (PHEV), a fuel cell electric vehicle (FCEV), a battery electric vehicle (BEV), and an engine vehicle. The steering device 21 applies a turning force to the wheels of the vehicle VH. The braking device 22 applies a braking force to the wheels of the vehicle VH.

The internal sensor device 30 is sensors which detect states of the vehicle VH. The internal sensor device 30 specifically includes a wheel speed sensor 31, an accelerator sensor 32, a brake sensor 33, a steering angle sensor 34, and the like. The wheel speed sensor 31 detects a travel speed of the vehicle VH, that is, a vehicle speed. The accelerator sensor 32 detects an operation amount of an accelerator pedal (not shown) by a driver. The brake sensor 33 detects an operation amount of a brake pedal (not shown) by the driver. The steering angle sensor 34 detects a rotation angle, that is, a steering angle of a steering wheel or a steering shaft (not shown). The internal sensor device 30 transmits, at a predetermined cycle, a state of the vehicle VH detected by each of the sensors 31 to 34 to the ECU 10.

The external sensor device 40 is sensors which recognize target object information relating to a target object in the periphery of the vehicle VH. Specifically, the external sensor device 40 includes a radar sensor 41, a sonar sensor 42, a camera sensor 43, and the like.

The radar sensor 41 includes a millimeter wave radar and/or a LiDAR sensor. The millimeter wave radar emits radio waves in the millimeter wave band and receives reflected waves reflected by a target object present within the radiation range, to thereby acquire a relative distance, a relative speed, and the like between the vehicle VH and the target object. The LiDAR sensor sequentially scans pulsed laser light having a wavelength shorter than that of millimeter waves in a plurality of directions, and receives the reflected light reflected by a target object, to thereby acquire a shape of a target object and a relative distance, a relative speed, and the like between the vehicle VH and the target object. The sonar sensor 42 emits ultrasonic waves and receives reflected waves reflected by a target object present within the radiation range, to thereby acquire a relative distance, a relative speed, and the like between the vehicle VH and the target object. The camera sensor 43 is, for example, a stereo camera or a monocular camera, and a digital camera including an image pickup element such as a CMOS device or a CCD can be used. The camera sensor 43 processes captured image data, to thereby acquire a shape of the target object and the relative distance, the relative speed, and the like between the vehicle VH and the target object. The external sensor device 40 transmits the acquired target object information to the ECU 10 at a predetermined cycle. However, the external sensor device 40 is not required to include all of the radar sensor 41, the sonar sensor 42, and the camera sensor 43, and may include only the camera sensor 43, for example.

The position information acquisition device 50 acquires information on the current position of the vehicle VH. As the position information acquisition device 50, for example, a global positioning system (GPS) or a global navigation satellite system (GNSS), for example, included in a navigation device (not shown) can be used. The position information acquisition device 50 transmits the acquired information on the current position of the vehicle VH to the ECU 10 at a predetermined cycle.

The map database 60 is a database of map information, and is stored in a storage device (for example, hard disk drive or flash memory) included in the vehicle VH. The map information includes, for example, position information on a public parking space. The map database 60 may be stored in an external server capable of communication to and from the vehicle VH. In this case, the vehicle VH may acquire the map information from the external server through the communication device 70.

The communication device 70 performs V2X communication. Specifically, the communication device 70 performs vehicle-to-infrastructure (V2I) communication to and from the vehicle VH and infrastructure. The communication device 70 can acquire information on the periphery of the vehicle VH through the V2X communication. The information on the periphery includes, for example, position information on a public parking space. The communication device 70 transmits the acquired information on the periphery to the ECU 10 at a predetermined cycle.

The automatic parking switch 80 is a switch which is provided to, for example, a center console or an instrument panel of the vehicle VH, and is turned on or off by an occupant (for example, a driver) of the vehicle VH. When the automatic parking switch 80 is turned on, the ECU 10 receives a parking assistance request. The automatic parking switch 80 is not limited to a physical switch, may be of a screen display type in which the selection is made through a touch operation or a dial operation on a button displayed on a display device 91 described later or a voice recognition type in which voice of the driver is collected by a sound collection microphone installed on the vehicle or the portable terminal 3.

The HMI 90 is an interface to be used to input and output information between the driver and the ECU 10, and includes an input device and an output device. Examples of the input device include a touch panel, a switch, and a sound collection microphone. Examples of the output device include the display device 91 and a speaker 92. The display device 91 is, for example, a center display, a multi-information display, or a head-up display. The speaker 92 is a speaker of, for example, an audio system or a navigation system.

### [Software Configuration]

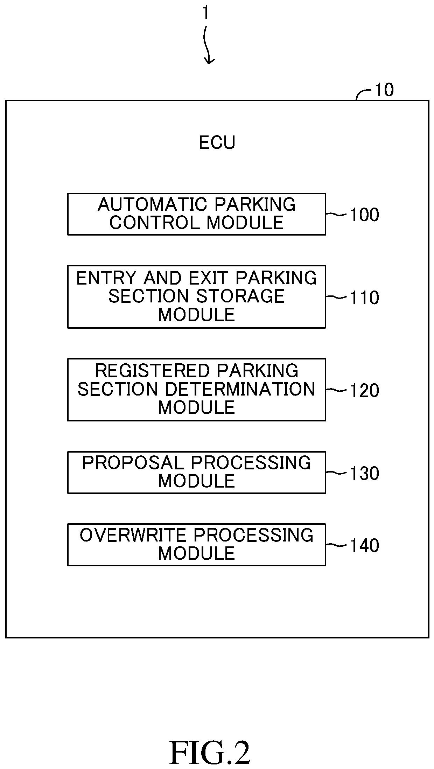

FIG. 2 is a schematic diagram for illustrating a software configuration of the parking assistance system according to the at least one embodiment. As illustrated in FIG. 2, the ECU 10 includes, as functional elements, an automatic parking control module 100, an entry and exit parking section storage module 110, a registered parking section determination module 120, a proposal processing module 130, an overwrite processing module 140, and the like. Each of those functional elements 100 to 140 is implemented by the CPU 11 of the ECU 10 reading out a program stored in the ROM 12 into the RAM 13 and executing the read-out program. A part of or all of the functional elements 100 to 140 may be provided in another ECU independent of the ECU 10 or in an information processing device of a facility (a management center or the like) communicable to and from the vehicle VH.

The automatic parking control module 100 executes the automatic parking control of causing the vehicle VH to automatically travel to cause the vehicle VH to enter a predetermined parking section or to exit from the predetermined parking section. Details of the automatic parking control are now described in a sequence of the automatic exit control and the automatic entry control. The parking assistance system according to the at least one embodiment can execute forward exit and backward exit as the automatic exit control, but the forward exit is described below, and description of the backward exit is omitted. Moreover, the parking assistance system according to the at least one embodiment can execute perpendicular parking and parallel parking as the automatic entry control, but the perpendicular parking is described below, and description of the parallel parking is omitted. Further, in the description given below, a user is not limited to a driver who actually drives the vehicle VH, but is a concept including another occupant who is aboard the vehicle VH together with the driver, a person in charge of a valet parking service, and the like.

### [Automatic Exit Control]

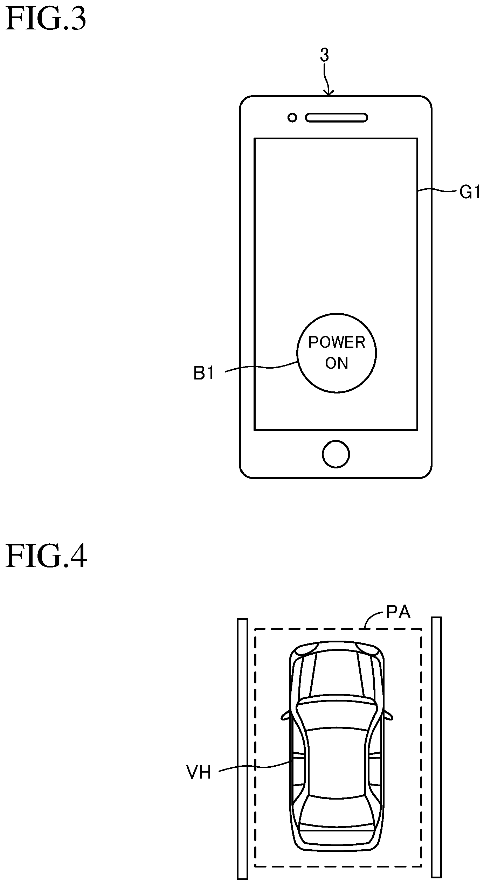

When the user holding the electronic key 2 and the portable terminal 3 approaches the vehicle VH to be within a predetermined distance range (for example, several meters) of the vehicle VH, and uses the electronic key 2 (smartphone in the case of the digital key) to unlock a door lock and starts the remote parking application of the portable terminal 3, the automatic parking control module 100 displays a power supply operation screen G1 illustrated in FIG. 3 on a display of the portable terminal 3 via the transceiver 16. This power supply operation screen G1 includes a power supply button B1. When the user executes the touch operation on the power supply button B1, the automatic parking control module 100 turns on power supply of the vehicle VH.

When the power supply of the vehicle VH is turned on, the automatic parking control module 100 acquires a position of the vehicle VH with respect to a parking section in which the vehicle VH is parked and the like based on a detection result of the external sensor device 40. For example, when the vehicle VH is parked in a parking section PA illustrated in FIG. 4, the automatic parking control module 100 acquires the position of the vehicle VH with respect to the parking section PA and the like. When the automatic parking control module 100 acquires the position of the vehicle VH with respect to the parking section PA and the like, the automatic parking control module 100 acquires a direction toward which the vehicle VH can be caused to exit (hereinafter referred to as "possible exit direction") based on the detection result of the external sensor device 40.

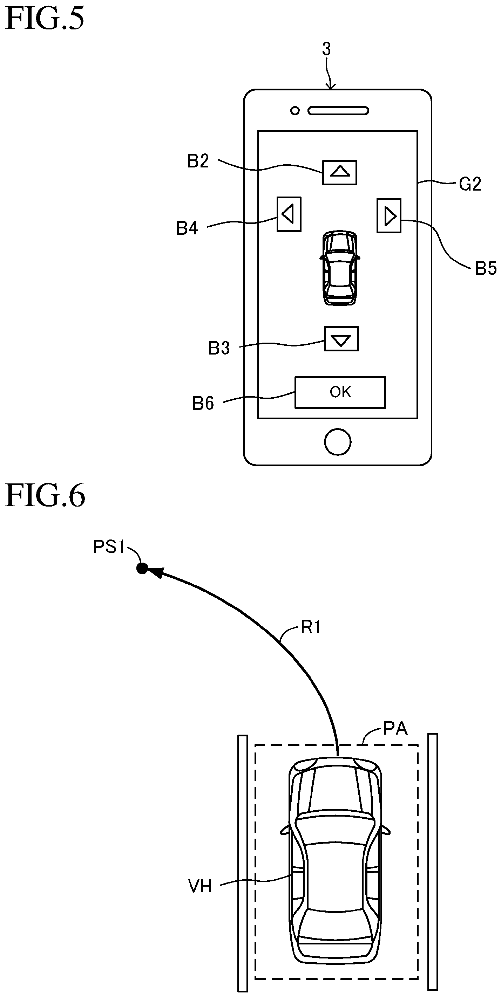

When the automatic parking control module 100 acquires the possible exit direction, the automatic parking control module 100 displays an exit plan selection screen G2 illustrated in FIG. 5 on the display of the portable terminal 3 via the transceiver 16. This exit plan selection screen G2 includes a plurality of exit direction selection buttons B2, B3, B4, and B5 and an exit direction confirmation button B6. In the illustrated example, as the exit direction selection buttons, there are displayed a front direction selection button B2 indicating an exit toward a front direction, a rear direction selection button B3 indicating an exit toward a rear direction, a left front direction selection button B4 indicating an exit toward a left front direction, and a right front direction selection button B5 indicating an exit toward a right front direction. The exit direction confirmation button B6 is a button for confirming the exit direction selected by the user. When the user executes the touch operation on, for example, the left front direction selection button B4, and then executes the touch operation on the exit direction confirmation button B6, the automatic parking control module 100 sets the left front direction as a specified exit direction. The touch operations executed by the user on the exit direction selection buttons B2, B3, B4, and B5 and the exit direction confirmation button B6 are hereinafter referred to as "exit plan setting operations."

When the automatic parking control module 100 sets the specified exit direction, the automatic parking control module 100 sets a target exit path R1 based on the detection result of the external sensor device 40. As illustrated in FIG. 6, the target exit path R1 is a path for causing the vehicle VH to travel from the parking section PA to a target exit stop position PS1 in the specified exit direction. FIG. 6 shows an example in which the left front direction is set as the specified exit direction.

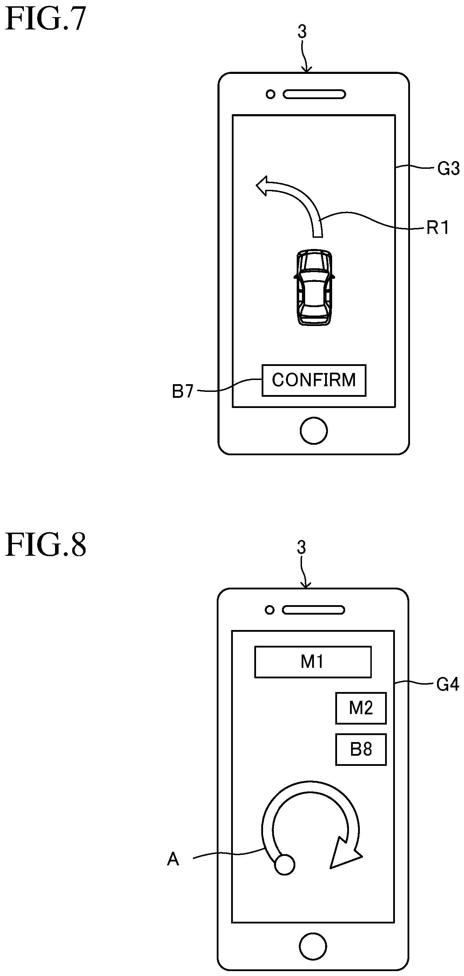

When the automatic parking control module 100 sets the target exit path R1, the automatic parking control module 100 displays an exit plan checking screen G3 illustrated in FIG. 7 on the display of the portable terminal 3 via the transceiver 16. This exit plan checking screen G3 includes, for example, the target exit path R1 and an exit plan confirmation button B7. When the user executes the touch operation on the exit plan confirmation button B7, the automatic parking control module 100 finishes the setting processing for the exit plan.

When the automatic parking control module 100 finishes the setting processing for the exit plan, the automatic parking control module 100 displays an exit operation screen G4 illustrated in FIG. 8 on the display of the portable terminal 3 via the transceiver 16. This exit operation screen G4 includes a message M1 to be notified to the user, an arrow A visually indicating operation content, remaining distance display M2, and a boarding button B8. As the message M1, for example, a sentence "Operate your vehicle after checking the safety of surroundings" is displayed. The remaining distance display M2 is a distance for which the vehicle VH travels until the vehicle VH arrives at the target exit stop position PS1 from the current position. The boarding button B8 is a button for indicating an intention of the user of finishing the exit assistance and then boarding the vehicle VH.

When the user moves the finger such that the user draws a circle along the arrow A while touching the display of the portable terminal 3, the automatic parking control module 100 controls operations of the drive device 20, the steering device 21, and the braking device 22 based on the detection results of the internal sensor device 30 and the external sensor device 40, to thereby start exit travel control of causing the vehicle VH to automatically travel along the target exit path R1. When the automatic parking control module 100 starts the exit travel control, the automatic parking control module 100 successively calculates a movement trajectory of the vehicle VH. Moreover, the automatic parking control module 100 calculates the remaining distance for which the vehicle VH travels until the vehicle VH reaches the target exit stop position PS1 based on the movement trajectory successively calculated during the execution of the exit travel control, and displays the remaining distance in the remaining distance display M2. The movement trajectory may be calculated, for example, through odometry based on detection results of the wheel speed sensor 31 and the steering angle sensor 34, or can also be estimated based on an optical flow or the like from image data on a peripheral road surface of the vehicle VH captured by the camera sensor 43.

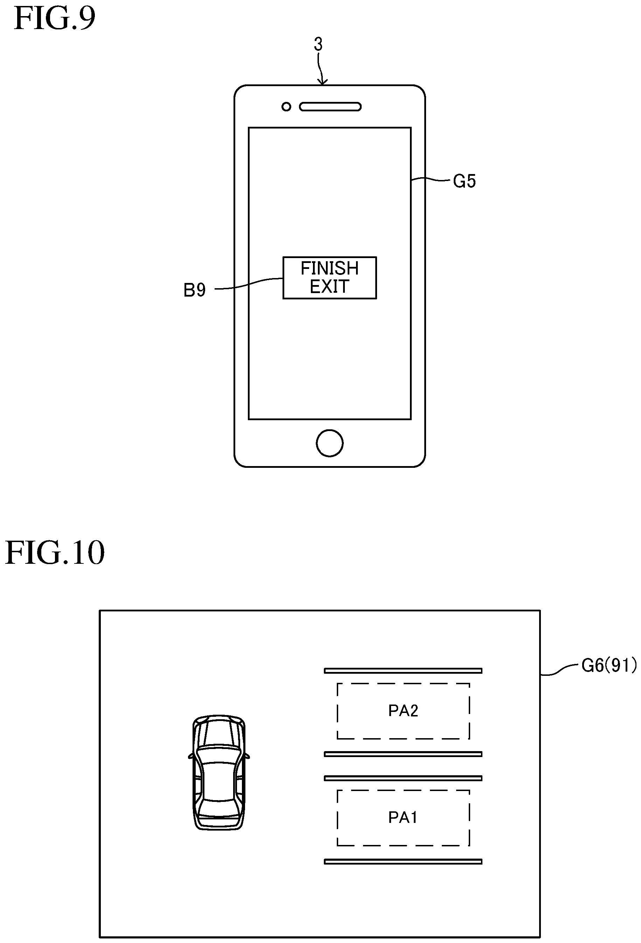

When the user stops the movement of the finger or separates the finger from the display of the portable terminal 3 during the execution of the exit travel control, the automatic parking control module 100 suspends the exit travel control. When the user executes the touch operation on the boarding button B8 after the user stops the movement of the finger or separates the finger from the display of the portable terminal 3, the automatic parking control module 100 displays an exit finish checking screen G5 illustrated in FIG. 9 on the display of the portable terminal 3 via the transceiver 16. This exit finish checking screen G5 includes an exit finish button B9. When the user executes the touch operation on the exit finish button B9, the automatic parking control module 100 finishes the automatic exit control.

### [Automatic Entry Control]

When the user executes the ON operation on the automatic parking switch 80 after the user has stopped the vehicle VH in a vicinity of a desired parking section (for example, in front of the parking section), the automatic parking control module 100 displays, on the display device 91, as illustrated in FIG. 10, an overhead image screen G6, which shows an image around the vehicle VH generated based on the image data of the camera sensor 43. When the user has started the remote parking application of the portable terminal 3, the automatic parking control module 100 may display the overhead image screen G6 on the display of the portable terminal 3.

After the automatic parking control module 100 displays the overhead image screen G6, the automatic parking control module 100 detects, based on the detection result of the external sensor device 40, a parking section (hereinafter referred to as "possible parking section") in which the vehicle VH can be parked. Moreover, when the automatic parking control module 100 detects the possible parking section, the automatic parking control module 100 displays the possible parking section in the overhead image screen G6. In the example illustrated in FIG. 10, two possible parking sections PA1 and PA2 are displayed on the overhead image screen G6.

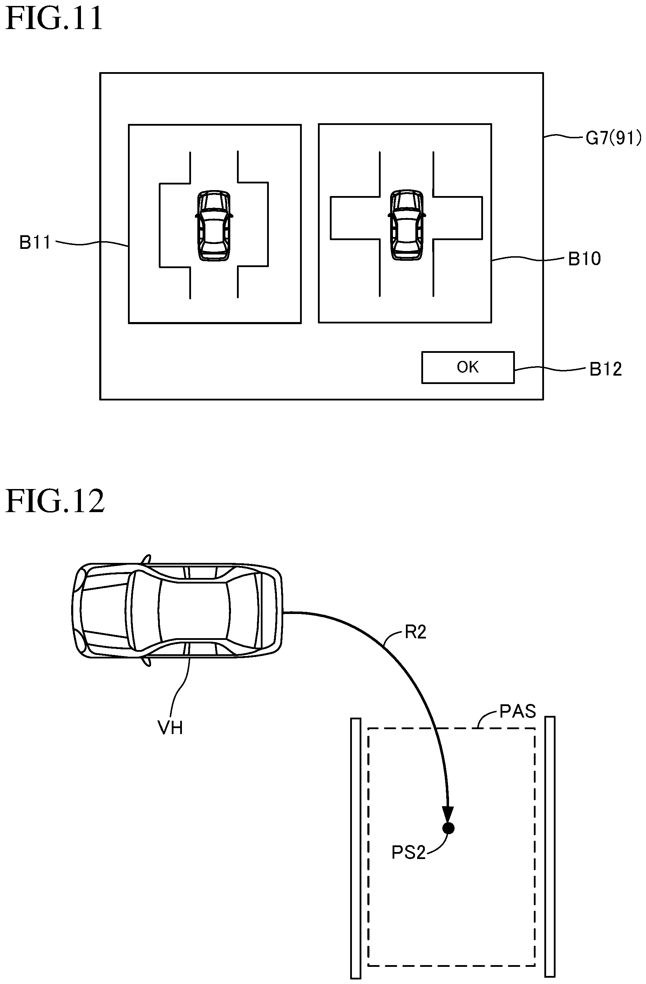

When the user executes the touch operation on, for example, the possible parking section PA1 of the overhead image screen G6, the automatic parking control module 100 sets the possible parking section PA1 as a parking section (hereinafter referred to as "specified parking section PAS") in which the user wants to park the vehicle VH. Moreover, after the automatic parking control module 100 sets the specified parking section PAS, the automatic parking control module 100 displays an entry plan selection screen G7 illustrated in FIG. 11 on the display device 91. This entry plan selection screen G7 includes a perpendicular parking button B10 for causing the vehicle VH to execute the perpendicular parking in the specified parking section PAS, a parallel parking button B11 for causing the vehicle VH to execute parallel parking in the specified parking section PAS, and an entry method confirmation button B12 for confirming the entry method. When the user has started the remote parking application of the portable terminal 3, the automatic parking control module 100 may display the entry plan selection screen G7 on the display of the portable terminal 3.

When, for example, the user executes the touch operation on the perpendicular parking button B10, and then executes a tap operation on the entry method confirmation button B12, the automatic parking control module 100 sets an entry method for the vehicle VH to the perpendicular parking. After the automatic parking control module 100 sets the entry method, the automatic parking control module 100 displays a message (not shown) for prompting the user to exit from the vehicle on the display device 91. The touch operation on the possible parking sections PA1 and PA2 and the touch operation on the perpendicular parking button B10 and the parallel parking button B11 executed by the user are hereinafter referred to as "entry plan setting operations."

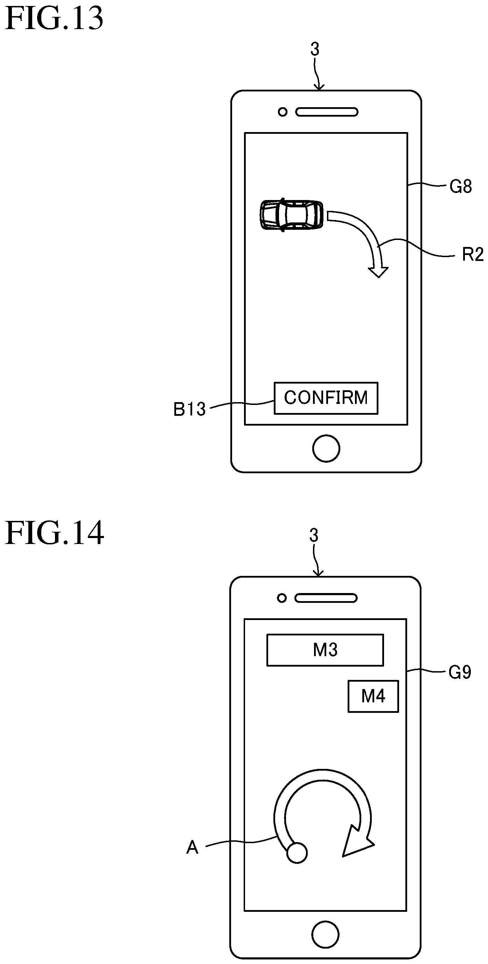

When the user exits from the vehicle VH while holding the electronic key 2 and the portable terminal 3, the automatic parking control module 100 sets a target entry path R2 based on the detection result of the external sensor device 40. As illustrated in FIG. 12, the target entry path R2 is a path for causing the vehicle VH to travel to a target entry stop position PS2 in the specified parking section PAS. When the automatic parking control module 100 sets the target entry path R2, the automatic parking control module 100 displays an entry plan checking screen G8 illustrated in FIG. 13 on the display of the portable terminal 3 via the transceiver 16. This entry plan checking screen G8 includes, for example, the target entry path R2 and an entry plan confirmation button B13. When the user executes the touch operation on the entry plan confirmation button B13, the automatic parking control module 100 finishes the setting processing for the entry plan.

When the automatic parking control module 100 finishes the setting processing for the entry plan, the automatic parking control module 100 displays an entry operation screen G9 illustrated in FIG. 14 on the display of the portable terminal 3 via the transceiver 16. This entry operation screen G9 includes a message M3 to be notified to the user, an arrow A visually indicating operation content, and remaining distance display M4. The remaining distance display M4 is a distance for which the vehicle VH travels until the vehicle VH arrives at the target entry stop position PS2 from the current position.

When the user moves the finger such that the user draws a circle along the arrow A while touching the display of the portable terminal 3, the automatic parking control module 100 controls operations of the drive device 20, the steering device 21, and the braking device 22 based on the detection results of the internal sensor device 30 and the external sensor device 40, to thereby start entry travel control of causing the vehicle VH to automatically travel along the target entry path R2. When the user stops the movement of the finger or separates the finger from the display of the portable terminal 3 during the execution of entry travel control, the automatic parking control module 100 stops the entry travel control.

When the automatic parking control module 100 starts the entry travel control, the automatic parking control module 100 successively calculates a movement trajectory. Moreover, the automatic parking control module 100 calculates a remaining distance for which the vehicle VH travels until the vehicle VH reaches the target entry stop position PS2 based on the movement trajectory successively calculated during the execution of the entry travel control, and displays the remaining distance in the remaining distance display M4. The movement trajectory may be calculated, for example, through the odometry based on the detection results of the wheel speed sensor 31 and the steering angle sensor 34, or can also be estimated based on the optical flow or the like from the image data on the peripheral road surface of the vehicle VH captured by the camera sensor 43.

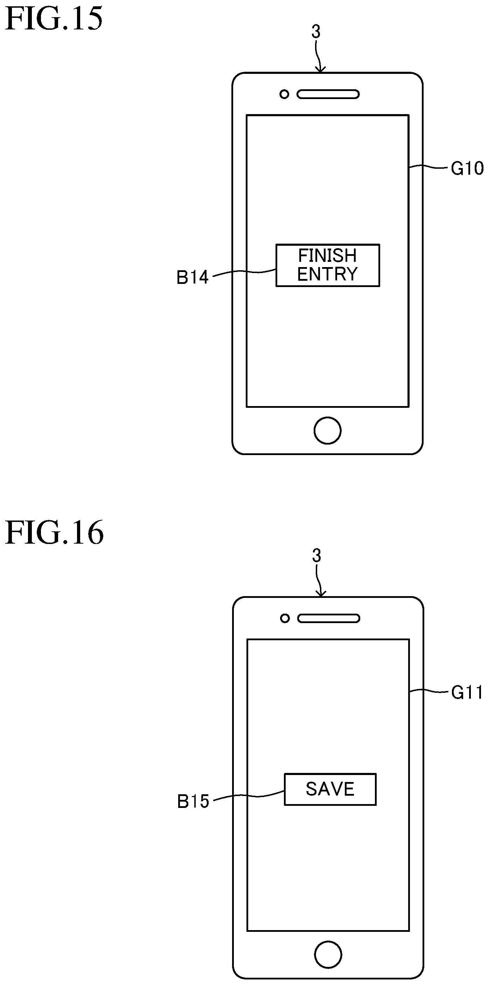

The automatic parking control module 100 determines whether or not the vehicle VH has reached the target entry stop position PS2 based on the movement trajectory successively calculated during the execution of the entry travel control. When the automatic parking control module 100 determines that the vehicle VH has reached the target entry stop position PS2, the automatic parking control module 100 displays an entry finish checking screen G10 illustrated in FIG. 15 on the display of the portable terminal 3 via the transceiver 16. This entry finish checking screen G10 includes an entry finish button B14. When the user executes the touch operation on the entry finish button B14, the automatic parking control module 100 finishes the automatic entry control.

Consideration is now given to a case in which the vehicle VH is, also for the next and subsequent times, caused to enter or exit from, through use of the parking assistance system, a parking section which the vehicle VH has been caused to enter or exit from through use of the parking assistance system. When the user has executed the above-mentioned entry plan setting operation or exit plan setting operation at the time of the entry or the exit, but the same selection operation is required for the same parking section also for the next and subsequent times, this may annoy the user. For example, in a case in which the vehicle VH is used by a plurality of users, such as a case in which the vehicle VH is shared among family members or a case in which the vehicle VH is shared among an unspecified large number of users as in a car sharing system, when setting information on the entry plan setting operation or the exit plan setting operation executed by a predetermined user can be shared among other users, time and effort of the other users can be saved.

The parking assistance system according to the at least one embodiment executes setting proposal processing of proposing setting information on the entry plan setting operation or the exit plan setting operation executed by a predetermined user, at the time of the entry or the exit of the vehicle VH in or from the same parking section for the next and subsequent times, to thereby increase convenience of the user. Description is now given of details of the entry and exit parking section storage module 110, the registered parking section determination module 120, the proposal processing module 130, and the overwrite processing module 140 which are functional components for implementing the setting proposal processing.

### [Setting Proposal Processing]

The entry and exit parking section storage module 110 stores position information (three-dimensional position coordinates in the world coordinate system) on a parking section which the user has used the parking assistance system to cause the vehicle VH to enter or exit from for the first time and image data on this parking section in association with setting information on the entry plan setting operation and the exit plan setting operation executed by the user at this time. The setting information is the entry method (the perpendicular parking, the parallel parking, or the like) selected by the user on the entry plan selection screen G7 when the parking assistance system has executed the automatic entry control or the exit direction (the front direction, the rear direction, the left front direction, or the right front direction) selected by the user on the exit plan selection screen G2 when the parking assistance system has executed the automatic exit control. As the position information on the parking section, position information on the vehicle VH acquired by the position information acquisition device 50 may be used, or when the parking section is a public parking space, the position information may be acquired through the map database 60, V2I communication, or the like. As the image data on the parking section, it is only required to use image data on the parking section captured by the camera sensor 43. The parking section stored in the entry and exit parking section storage module 110 is hereinafter referred to as "registered parking section".

The registered parking section determination module 120 determines, when the user uses the parking assistance system to cause the vehicle VH to enter or exit from a predetermined parking section (hereinafter referred to as "target parking section"), whether or not the target parking section is the registered parking section. Specifically, the registered parking section determination module 120 makes this determination at a timing at which the user stops the vehicle VH, and then executes the ON operation on the automatic parking switch 80 or starts the remote parking application of the portable terminal 3 when the user causes the vehicle VH to enter the target parking section. Moreover, the registered parking section determination module 120 makes this determination at a timing at which the user uses the electronic key 2 (smartphone in the case of the digital key system) to unlock the door lock, and then starts the remote parking application of the portable terminal 3 when the user causes the vehicle VH to exit from the target parking section. For the determination of whether or not the target parking section is the registered parking section, it is only required to compare the current position information on the vehicle VH acquired by the position information acquisition device 50 and the position information on the registered parking section with each other, and to collate feature points of image data on the target parking section captured by the camera sensor 43 and feature points of the image data on the registered parking section with each other. The registered parking section determination module 120 transmits a determination result to the proposal processing module 130.

When the registered parking section determination module 120 determines that the target parking section is the registered parking section, the proposal processing module 130 executes proposal processing of proposing, to the user, the setting information stored in the entry and exit parking section storage module 110 in association with the registered parking section. In this case, the user who is the target of the proposal processing includes, in addition to a user (first user in the present disclosure) who has actually executed the entry plan setting operation or the exit plan setting operation for the first time for this parking section, another user (second user in the present disclosure) who is to cause the vehicle VH to enter or exit from this parking section for the next and subsequent times.

The proposal processing module 130 displays the entry plan checking screen G8 (see FIG. 13) corresponding to the setting information on the registered parking section on the display of the portable terminal 3 via the transceiver 16 when the user causes the vehicle VH to enter the target parking section. In the example illustrated in FIG. 13, the perpendicular parking is displayed as the setting information (entry method) on the registered parking section. When the user executes the touch operation on the entry plan confirmation button B13 of the entry plan checking screen G8, the proposal processing module 130 finishes the proposal processing. When the proposal processing module 130 finishes the proposal processing, the automatic parking control module 100 displays the entry operation screen G9 (see FIG. 14) on the display of the portable terminal 3 via the transceiver 16. That is, the user can immediately start the entry operation. As a result, the user can early confirm the entry plan while bypassing the selection operation on the entry plan selection screen G7 (FIG. 11), and hence convenience can be increased.

The proposal processing module 130 displays the exit plan checking screen G3 (see FIG. 7) corresponding to the setting information on the registered parking section on the display of the portable terminal 3 via the transceiver 16 when the user causes the vehicle VH to exit from the target parking section. In the example illustrated in FIG. 7, the left front direction is displayed as the setting information (exit direction) on the registered parking section. When the user executes the touch operation on the exit plan confirmation button B7 of the exit plan checking screen G3, the proposal processing module 130 finishes the proposal processing. When the proposal processing module 130 finishes the proposal processing, the automatic parking control module 100 displays the exit operation screen G4 (see FIG. 8) on the display of the portable terminal 3 via the transceiver 16. That is, the user can immediately start the exit operation. As a result, the user can early confirm the exit plan while bypassing the selection operation on the exit plan selection screen G2 (FIG. 5), and hence convenience can be increased.

When the user does not approve the proposal of the entry plan or the exit plan proposed by the proposal processing module 130, the overwrite processing module 140 executes overwrite processing of storing a new entry plan or exit plan in the entry and exit parking section storage module 110 in association with the registered parking section.

When the user does not approve the proposed entry plan, that is, the user does not execute the touch operation on the entry plan confirmation button B13 on the entry plan checking screen G8, the automatic parking control module 100 displays the entry plan selection screen G7 (see FIG. 11) on the display device 91 or the display of the portable terminal 3. When the user selects a new entry plan (entry method) different from the proposed entry plan, the automatic parking control module 100 executes the above-mentioned automatic entry control based on the new entry plan. At this time, the overwrite processing module 140 displays a saving checking screen G11 illustrated in FIG. 16 on the display of the portable terminal 3 via the transceiver 16. When the user executes the touch operation on a save button B15 of the saving checking screen G11, the overwrite processing module 140 stores the new entry plan (entry method) in the entry and exit parking section storage module 110 in association with the position information on the registered parking section.

When the user does not approve the proposed exit plan, that is, the user does not execute the touch operation on the exit plan confirmation button B7 on the exit plan checking screen G3, the automatic parking control module 100 displays the exit plan selection screen G2 (see FIG. 5) on the display of the portable terminal 3 via the transceiver 16. When the user selects a new exit plan (exit direction) different from the proposed exit plan, the automatic parking control module 100 executes the above-mentioned automatic exit control based on the new exit plan. At this time, the overwrite processing module 140 displays the saving checking screen G11 illustrated in FIG. 16 on the display of the portable terminal 3 via the transceiver 16. When the user executes the touch operation on the save button B15 of the saving checking screen G11, the overwrite processing module 140 stores the new exit plan (exit direction) in the entry and exit parking section storage module 110 in association with the position information on the registered parking section.

As described above, when the user selects a new entry plan or exit plan, it is possible to effectively respond to, for example, a case in which an environment around the registered parking section has been changed, by overwriting the setting information on the registered parking section with the new entry plan or exit plan. Moreover, by overwriting the setting information after the confirmation for the overwrite is obtained from the user, it is possible to prevent unnecessary overwrite when the entry plan or exit plan is changed for such an exceptional reason that another vehicle is incidentally stopped at the time of the current entry or exit.

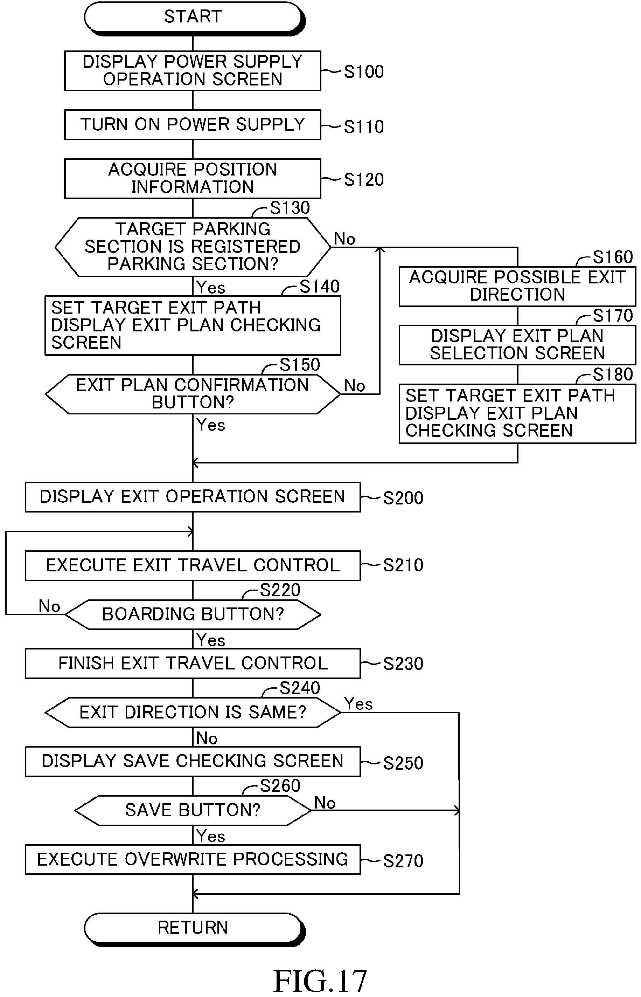

Referring to a flowchart of FIG. 17, description is now given of a routine of the automatic exit control and the setting proposal processing executed by the CPU 11 of the ECU 10. The automatic entry control has substantially the same flow as that of the automatic exit control, and hence description thereof is omitted. This routine starts when the user uses the electronic key 2 (or the smartphone) to unlock the door lock of the vehicle VH, and starts the remote parking application of the portable terminal 3.

In Step S100, the ECU 10 displays the power supply operation screen G1 on the display of the portable terminal 3 via the transceiver 16. When the user executes the touch operation on the power supply button B1 of the power supply operation screen G1, the ECU 10 advances the process to Step S110, and turns on the power supply of the vehicle VH.

In Step S120, the ECU 10 acquires the current position information of the vehicle VH based on the detection result of the position information acquisition device 50. After that, in Step S130, the ECU 10 determines whether or not the target parking section in which the vehicle VH is currently parked is the registered parking section. When the target parking section is the registered parking section (Yes), the ECU 10 advances the process to Step S140. Meanwhile, when the target parking section is not the registered parking section (No), the ECU 10 advances the process to Step S160.

When the process is advanced from Step S130 to Step S160, the ECU 10 acquires the possible exit direction toward which the vehicle VH can be caused to exit based on the detection result of the external sensor device 40. After that, in Step S170, the ECU 10 displays the exit plan selection screen G2 on the display of the portable terminal 3 via the transceiver 16. When the user executes the touch operation on the exit direction selection button B2, B3, B4, or B5 of the exit plan selection screen G2, and then executes the touch operation on the exit direction confirmation button B6, the ECU 10 advances the process to Step S180.

In Step S180, the ECU 10 sets the target exit path R1 based on the detection result of the external sensor device 40, and displays the exit plan checking screen G3 on the display of the portable terminal 3 via the transceiver 16. When the user executes the touch operation on the exit plan confirmation button B7 of the exit plan checking screen G3, the ECU 10 advances the process to Step S200.

In Step S200, the ECU 10 displays the exit operation screen G4 on the display of the portable terminal 3 via the transceiver 16. When the user starts the operation while touching the display of the portable terminal 3, the ECU 10 advances the process to Step S210, and executes the exit travel control of causing the vehicle VH to automatically travel along the target exit path R1. In Step S220, the ECU 10 determines whether or not the user has executed the touch operation on the boarding button B8 of the exit operation screen G4. When the user has executed the touch operation on the boarding button B8 (Yes), the ECU 10 advances the process to Step S230, and finishes the exit travel control. Meanwhile, when the user has not executed the touch operation on the boarding button B8 (No), the ECU 10 continues the processing step of Step S210.

When the process is advanced from Step S130 to Step S140, the ECU 10 sets the target exit path R1 based on the detection result of the external sensor device 40, and displays, on the display of the portable terminal 3, the entry plan checking screen G8 corresponding to the setting information on the registered parking section stored in the entry and exit parking section storage module 110.

In Step S150, the ECU 10 determines whether or not the user has executed the touch operation on the exit plan confirmation button B7 of the exit plan checking screen G3. When the user has executed the touch operation on the exit plan confirmation button B7 (Yes), the ECU 10 considers that the user has approved the proposal, and advances the process to Step S200. That is, the ECU 10 proceeds to the display of the exit operation screen G4 while bypassing the exit plan selection screen G2. With this configuration, the time and effort of the user can be reduced, and hence the convenience can be increased. When the user has not executed the touch operation on the exit plan confirmation button B7 (No), the ECU 10 considers that the user has not approved the proposal, and advances the process to Step S160.

When the process is advanced from Step S230 to Step S240, the ECU 10 determines whether or not the exit direction of the automatic exit control executed this time is the same as the setting information (exit direction) stored in association with the registered parking section. When the current exit direction is the same as the setting information (exit direction) (Yes), the ECU 10 returns from this routine. Meanwhile, when the current exit direction is different from the setting information (exit direction) (No), the ECU 10 advances the process to Step S250.

In Step S250, the ECU 10 displays the saving checking screen G11 on the display of the portable terminal 3 via the transceiver 16. After that, in Step S260, the ECU 10 determines whether or not the user has executed the touch operation on the save button B16 of the saving checking screen G11. When the user has not executed the touch operation on the save button B16 (No), the ECU 10 returns from this routine. Meanwhile, when the user has executed the touch operation on the save button B16 (Yes), the ECU 10 advances the process to Step S270. In Step S270, the ECU 10 executes the overwrite processing of storing the new exit plan (exit direction) in association with the position information on the registered parking section, and returns from this routine.

The present disclosure is not limited to the at least one embodiment described above, and various changes are possible within the range not departing from the object of the present disclosure.

For example, when the vehicle VH is shared among an unspecified large number of users as in the car sharing, a switching function in which the above-mentioned setting proposal processing is effective only in a public parking space may be provided. When this function is provided, in a case in which a specific user parks the vehicle VH in a home parking space or the like, it is possible to effectively prevent personal information on this user from being known by another user.

Moreover, the parking assistance system according to the at least one embodiment described above is described as the parking assistance system which executes the setting proposal processing without identifying a user, but the parking assistance system may have a function of identifying a user, and may be configured to store the setting information (the exit direction and the entry method) of each user in association with each identified user. When the setting information stored in association with the specific user is proposed to another user also in this case, the convenience of this another user can be increased. It is only required to identify the user based on, for example, a type of the electronic key 2 or the portable terminal 3 held by each user.

Moreover, the parking assistance system according to the at least one embodiment described above stores the entry method and the exit direction as the setting information, and hence, compared with a case in which a large amount of information is stored, a consumed memory amount can be saved. It is also possible to apply this configuration to a parking assistance system of a so-called path storage type which stores the movement paths of the vehicle VH at the time of entry and exit and uses the stored movement paths in the assistance control executed the next and subsequent times. In this case, it is only required to include the movement path as well in the setting information stored in association with the parking section.

Moreover, in the at least one embodiment described above, the so-called remote parking in which the user remotely operates the vehicle VH is described as an example, and the technology of the at least one embodiment of the present disclosure can be applied to a system which executes the parking assistance under a state in which the user remains onboard the vehicle VH.

Moreover, in the above description of the at least one embodiment, the user basically executes the operations through the touch operation on the display device 91 and the portable terminal 3, but at least a part of or all of the operations may be executed through voice recognition which uses a sound collection microphone.

Moreover, the technology of the at least one embodiment of the present disclosure can also be applied to a self-driving vehicle which autonomously executes a part or all of a driving operation.

## Claims

1. A parking assistance system, comprising a control device (1) configured to execute automatic parking control of executing one of automatically parking a vehicle in a parking section or causing the vehicle to automatically exit from the parking section based on a parking method selected by a user from a plurality of parking methods, the control device including:
a storage module (110) configured to store, in association with position information on a specific parking section (PAS), a parking method selected by a first user when the first user executes one of parking the vehicle in the specific parking section or causing the vehicle to exit from the specific parking section through the automatic parking control;
a determination module (120) configured to determine, when a second user executes one of parking the vehicle in a predetermined parking section or causing the vehicle to exit from the predetermined parking section through the automatic parking control, based on current position information on the vehicle and the position information on the specific parking section stored in the storage module (110), whether the predetermined parking section is the specific parking section (PAS); and
a proposal processing module (130) configured to execute proposal processing of proposing, when the determination module (120) determines that the predetermined parking section is the specific parking section (PAS), to the second user, the parking method stored in the storage module (110) in association with the position information on the specific parking section (PAS).

2. The parking assistance system according to claim 1, further comprising an overwrite processing module (140) configured to execute, when the second user does not select the parking method proposed by the proposal processing module (130) and selects a new parking method different from the proposed parking method, overwrite processing of storing the new parking method in association with the position information on the specific parking section (PAS).

3. The parking assistance system according to claim 2, wherein the overwrite processing module (140) is configured to execute the overwrite processing when the second user approves the storing of the new parking method.

4. The parking assistance system according to claim 1, wherein the control device (1) is configured to execute, when the second user does not select the parking method proposed by the proposal processing module and selects a new parking method different from the proposed parking method, the automatic parking control based on the new parking method.

5. The parking assistance system according to claim 1, further comprising a portable terminal (3) on which a predetermined application is installed, and which is configured to communicate to and from the control device (1),
wherein the control device (1) is configured to execute, as the automatic parking control, remote parking control of executing one of automatically parking the vehicle in a parking section or causing the vehicle to automatically exit from the parking section in accordance with a command transmitted from the portable terminal (3) by the user using the predetermined application.

6. A parking assistance method of executing automatic parking control of executing one of automatically parking a vehicle in a parking section or causing the vehicle to automatically exit from the parking section based on a parking method selected by a user from a plurality of parking methods, the parking assistance method comprising:
storing, in association with position information on a specific parking section (PAS), a parking method selected by a first user when the first user executes one of parking the vehicle in the specific parking section or causing the vehicle to exit from the specific parking section through the automatic parking control;
determining, when a second user executes one of parking the vehicle in a predetermined parking section or causing the vehicle to exit from the predetermined parking section through the automatic parking control, based on current position information on the vehicle and the stored position information on the specific parking section, whether the predetermined parking section is the specific parking section (PAS); and
executing proposal processing of proposing, when the predetermined parking section is determined to be the specific parking section (PAS), to the second user, the parking method stored in association with the position information on the specific parking section (PAS).

7. A program for causing a computer of a parking assistance system, the parking assistance system including a control device configured to execute automatic parking control of executing one of automatically parking a vehicle in a parking section or causing the vehicle to automatically exit from the parking section based on a parking method selected by a user from a plurality of parking methods, to execute:
processing of storing, in association with position information on a specific parking section (PAS), a parking method selected by a first user when the first user executes one of parking the vehicle in the specific parking section or causing the vehicle to exit from the specific parking section through the automatic parking control;
processing of determining, when a second user executes one of parking the vehicle in a predetermined parking section or causing the vehicle to exit from the predetermined parking section through the automatic parking control, based on current position information on the vehicle and the stored position information on the specific parking section, whether the predetermined parking section is the specific parking section (PAS); and
processing of proposing, when the predetermined parking section is determined to be the specific parking section (PAS), to the second user, the parking method stored in association with the position information on the specific parking section (PAS).
